# EUROPÄISCHE PATENTSCHRIFT

(11) **EP 1 035 533 B1**
(45) Veröffentlichungstag und Bekanntmachung des Hinweises auf die Patenterteilung: **11.06.2003**
(21) Anmeldenummer: 00104441.1
(22) Anmeldetag: 06.03.2000
(51) Int. Cl.: G08G 1/16, G01S 13/93

(54) **Verfahren und Vorrichtung zur Abstandsregelung für ein Fahrzeug**
Method and device to set the distance for a vehicle
Procédé et appareil de régulation de distance pour un véhicule

(30) Priorität: 10.03.1999 DE 19910590
(43) Veröffentlichungstag der Anmeldung: 13.09.2000
(73) Patentinhaber: Volkswagen Aktiengesellschaft, 38436 Wolfsburg (DE)
(72) Erfinder: Bäker, Wolfgang, 38114 Braunschweig (DE); Ruchatz, Thomas, Dipl.-Ing., 38165 Lehre (DE)

(56) Entgegenhaltungen:
- DE-A- 4 200 694
- DE-C- 4 209 047
- US-A- 4 833 469
- US-A- 5 197 562
- PATENT ABSTRACTS OF JAPAN vol. 1998, no. 03, 27. Februar 1998 (1998-02-27) & JP 09 293199 A (MATSUSHITA ELECTRIC IND CO LTD), 11. November 1997 (1997-11-11)
- PATENT ABSTRACTS OF JAPAN vol. 1995, no. 03, 28. April 1995 (1995-04-28) & JP 06 336125 A (TOYOTA CENTRAL RES & DEV LAB INC;OTHERS: 01), 6. Dezember 1994 (1994-12-06)
- PATENT ABSTRACTS OF JAPAN vol. 1995, no. 02, 31. März 1995 (1995-03-31) & JP 06 328969 A (TOYOTA CENTRAL RES & DEV LAB INC;OTHERS: 01), 29. November 1994 (1994-11-29)
- PATENT ABSTRACTS OF JAPAN vol. 018, no. 409 (P-1779), 29. Juli 1994 (1994-07-29) & JP 06 119599 A (NISSAN MOTOR CO LTD), 28. April 1994 (1994-04-28)
- PATENT ABSTRACTS OF JAPAN vol. 018, no. 522 (P-1808), 30. September 1994 (1994-09-30) & JP 06 180800 A (AKEBONO BRAKE IND CO LTD;OTHERS: 01), 28. Juni 1994 (1994-06-28)

## Beschreibung

Die Erfindung betrifft ein Verfahren zur Abstandsregelung für ein Fahrzeug, bei dem eine Relativgeschwindigkeit und ein Relativabstand zwischen dem Fahrzeug und einem vorausfahrenden Fahrzeug ermittelt und aus diesen Größen ein Regelsignal für eine Abstandsregelungseinrichtung des Fahrzeuges erzeugt wird, sowie eine Vorrichtung zur Abstandsregelung.

In der deutschen Offenlegungsschrift DE 42 00 694 A1 ist ein Verfahren zur Geschwindigkeits- und Abstandsregelung eines Fahrzeugs zu einem in Fahrtrichtung befindlichen Objekt beschrieben. Bei dem bekannten Verfahren wird der aktuelle Abstand sowie die momentane Geschwindigkeit erfaßt und daraus die Soll-Werte für den Abstand zu dem vor dem Fahrzeug befindlichen Objekt und für die Fahrgeschwindigkeit ermittelt und eingestellt.

Das Problem bei diesem Verfahren sowie bei sämtlichen anderen bekannten Verfahren, die eine abstandsgeregelte Fahrt eines Fahrzeuges ermöglichen, liegt dabei darin, daß Abstandsregelungen als fahrerunterstützende Systeme konzipiert werden, deren Akzeptanz durch den Fahrzeugführer davon abhängt, wie sehr das Regelverhalten seinem eigenen Fahrverhalten, insbesondere bei der Einhaltung des Abstandes zum vorausfahrenden Fahrzeug, ähnelt.

In der Veröffentlichung "Abstandsregelung von Fahrzeugen mit Fuzzy-Control", Tagungsband der 3. Dortmunder Fuzzy-Tage, Reihe Informatik Aktuell, Springer Verlag, 1993, wird vorgeschlagen, anstelle eines fest vorgegebenen Sollabstandes ein Abstandsmodell zu bestimmen, das vom Fahrertyp und der Witterung abhängt. Der Fahrertyp soll dabei über eine externe Sensorik ermittelt werden, wobei eine Möglichkeit zur zuverlässigen automatischen Fahrertyperkennung in der vorgenannten Veröffentlichung nicht angegeben wird.

In der europäischen Patentanmeldung EP 0 813 986 A1 wird ein Verfahren zur Abstandsregelung für ein Fahrzeug beschrieben, bei dem zumindest in Abhängigkeit der Fahrgeschwindigkeit des Fahrzeuges der Sollabstand zu einem vorausfahrenden Fahrzeugs mittels einer Einrichtung zur Berechnung des Sollabstands ermittelt wird, wobei die Einrichtung in ihrem·Übertragungsverhalten an das individuelle Fahrverhalten eines Fahrzeugführers adaptiert wird, indem die individuelle Folgezeit des Fahrzeugführers zum vorausfahrenden Fahrzeug über die Ermittlung des Sollabstands eingehalten wird, wobei die Einrichtung einen Fuzzy-Regler mit der Fahrgeschwindigkeit als Eingangsgröße und mindestens einer weiteren Eingangsgröße und dem Sollabstand als Ausgangsgröße darstellt, welcher Eingangs-Zugehörigkeitsfunktionen mit deren Wahrheitswerten linguistischer Werte zumindest für die Eingangsgröße ermittelt werden. Desweiteren ist ein Regelwerk, in welchem aus den Wahrheitswerten für die Eingangsgrößen Wahrheitswerte für den Sollabstand bestimmt werden und eine Ausgangs-Zugehörigkeitsfunktion, mit welcher aus den Wahrheitswerten des Sollabstands der einzuregelnde Sollabstand bestimmt wird, vorgesehen. Zur Durchführung dieser Regelung wird über den Wertebereich der Eingangsgrößen eine Anzahl von Klassen festgelegt und in einer Lernphase auftretende Wertekombinationen der Eingangsgrößen und der Abstandswerte erfaßt. In Abhängigkeit der erfaßten Wertekombinationen werden die festgelegten Klassen verändert, entfernt und/oder neue Klassen erzeugt und in Abhängigkeit der aktuellen Klassen angepaßte Zugehörigkeitsfunktionen angepaßte Regeln des Regelwerks erzeugt.

Ein derartiges Verfahren erlaubt zwar eine gute Adaption der Abstandsregelung an den Fahrzeugführer und erhöht somit die Akzeptanz eines derartigen Verfahrens; es besitzt jedoch den Nachteil, daß die hierbei einzusetzende Fuzzy-Logik relativ komplex und die Einrichtung daher aufwendig und teuer in der Herstellung ist.

Es ist daher Aufgabe der Erfindung, ein Verfahren und eine Vorrichtung zur Abstandsregelung der eingangs genannten Art derart weiterzubilden, daß bei einem einfachen Aufbau das Regelverhalten des erfindungsgemäßen Verfahrens auf das Fahrverhalten des Fahrzeugführers abgestimmt werden kann.

Diese Aufgabe wird erfindungsgemäß dadurch gelöst, daß aus der Relativgeschwindigkeit und dem Relativabstand ein Gefahrenmaß bestimmt wird, daß dieses Gefahrenmaß mit einem ein individuelles Fahrverhalten eines Fahrzeugführers des Fahrzeugs repräsentierenden, adaptiven Faktor gewichtet wird, und daß ein eine Verzögerung des Fahrzeugs einleitendes Regelsignal erzeugt wird, wenn das mit dem adaptiven Faktor gewichtete, fahrzeugführeradaptierte Gefahrenmaß einen definierten Schwellwert unterschreitet.

Durch die erfindungsgemäßen Maßnahmen werden in vorteilhafter Art und Weise ein Verfahren und eine Vorrichtung zur fahrzeugführeradaptiven Abstandsregelung eines Fahrzeuges geschaffen, welches sich durch sein akzeptanzförderndes Regelverhalten und seine einfache Umsetzbarkeit auszeichnet: In vorteilhafter Art und Weise ist die zur Ausführung des erfindungsgemäßen Verfahrens erforderliche Vorrichtung relativ einfach und wenig aufwendig. Außerdem sind keine komplizierten und daher zeit- und vorrichtungsaufwendigen Lernvorgänge mehr erforderlich, so daß das erfindungsgemäße Verfahren insbesondere zur Abstandsregelung bei Einschervorgängen, bei denen ein überholendes Fahrzeug das mit dem erfindungsgemäßen Abstandsregelungsverfahren ausgestattete Fahrzeug überholt und vor ihm einschert, einsetzbar ist.

Vorteilhafte Weiterbildungen der Erfindung sind Gegenstand der Unteransprüche.

Weitere Einzelheiten und Vorteile der Erfindung sind dem Ausführungsbeispiel zu entnehmen, das im folgenden anhand der Figuren beschrieben wird. Es zeigen:
- Figur 1: eine schematische Darstellung eines Einschervorgangs und
- Figur 2: eine schematische Darstellung des Regelungskreises des Verfahrens.

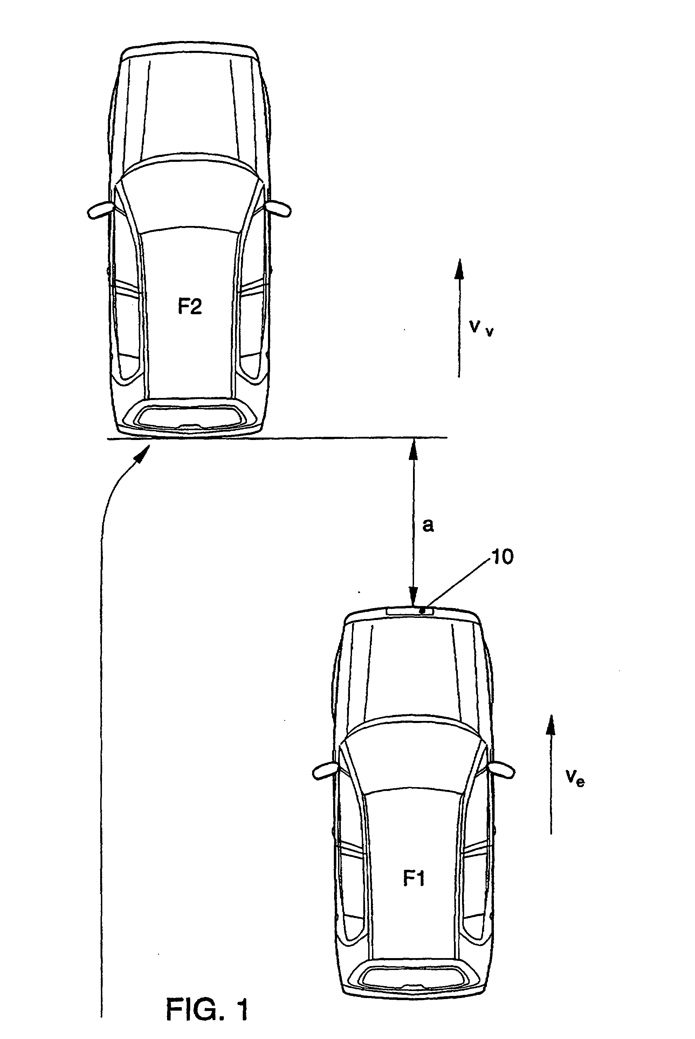

In Figur 1 ist nun eine typische Verkehrssituation bei einem Einschervorgang dargestellt, bei dem ein mit dem oben beschriebenen Verfahren ausgerüstetes Fahrzeug F1 von einem schnelleren Fahrzeug F2 überholt wird, wobei das schnellere Fahrzeug F2 in mehr oder minder großem Abstand a vor dem überholten Fahrzeug F1 einschert. Das Fahrzeug F1 bewegt sich mit einer Eigengeschwindigkeit v_{e'}, während sich das Überholende, nach dem Einschervorgang dem Fahrzeug F1 vorausfahrende Fahrzeug F2 mit einer Geschwindigkeit vᵥ bewegt.

Das Fahrzeug F1 ist nun mit an und für sich bekannten und daher nicht mehr näher beschriebenen sowie in Figur 1 nur schematisch dargestellten Sensoreinrichtungen 10 ausgestattet, durch die die Absolutgeschwindigkeit des Fahrzeugs F2 oder zumindest die Relativgeschwindigkeit vᵣₑₗ=vᵥ-vₑ zwischen den beiden Fahrzeugen F1 und F2 erfaßbar ist. Außerdem ist durch diese Sensoreinrichtung 10 der Abstand a zwischen den Fahrzeugen F1 und F2 ermittelbar. Die Sensoreinrichtung 10 erzeugt nun ein den Abstand a charakterisierendes Abstandssignal A und ein die Relativgeschwindigkeit vᵣₑₗ zwischen den Fahrzeugen F1 und F2 charakterisierendes Geschwindigkeitssignal vᵥ bzw. - bei einer Erfassung der Absolutgeschwindigkeit vᵥ - ein diese Absolutgeschwindigkeit des Fahrzeuges F2 charakterisierendes Geschwindigkeitssignal. Im folgenden wird davon ausgegangen, daß das Geschwindigkeitssignal die Relativgeschwindigkeit vᵣₑₗ zwischen den beiden Fahrzeugen F1 und F2 repräsentiert. Dies schränkt die Allgemeinheit der folgenden Überlegungen nicht ein, da dem Fachmann klar ersichtlich ist, daß er für den Fall, daß das Geschwindigkeitssignal die Absolutgeschwindigkeit vᵥ des Fahrzeuges F2 repräsentiert, er aus der bekannten Momentangeschwindigkeit vₑ des Fahrzeuges F1 einfach die Relativgeschwindigkeit vᵣₑₗ bestimmen kann.

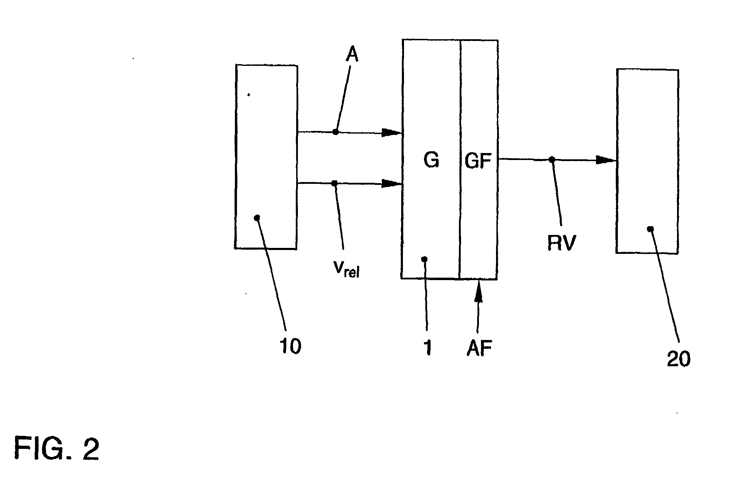

Die Ausgangssignale A und V der Sensoreinrichtung 10 werden nun - wie in Figur 2 schematisch dargestellt - einer Auswerteeinrichtung 1 zugeführt, die im einfachsten Fall der in der Mehrzahl der heutigen Fahrzeuge bereits vorhandene Bordcomputer ist. Die Auswerteeinrichtung 1 bestimmt nun ein Gefahrenmaß G, welches durch das Produkt aus der Relativgeschwindigkeit vᵣₑₗ und Abstand a festgelegt ist (G = vᵣₑₗ * a). Dieses Gefahrenmaß G wird nun in der Auswerteeinrichtung 1 mit einem das individuelle Fahrverhalten des Fahrzeugführers charakterisierenden, adaptiven Faktor AF gewichtet, wobei dieser Faktor eine konstante Größe sein kann, vom Fahrzeugführer individuell vorgegeben oder durch ein externes, fahrertyperkennendes System bestimmt werden kann. Wenn dieses durch die Gewichtung des Gefahrenmaßes G mit dem fahreradaptiven Faktor AF erzeugte, adaptierte Gefahrenmaß GF = AF * G kleiner als ein vordefinierter Schwellenwert S ist, erzeugt die Auswerteeinrichtung 1 ein Regelsignal RV, daß in an und für sich bekannter und daher nicht mehr näher beschriebenen Art und Weise eine Verzögerung des Kraftfahrzeuges, insbesondere einen Bremsvorgang, einleitet, indem eine Abstandsregelungseinrichtung 10 entsprechende Maßnahmen initiiert.

Die vorstehend beschriebene Feststellung eines Gefahrenmaßes G bzw. GF besitzt den Vorteil, daß hierdurch eine detaillierte Fallunterscheidung für die bei einem Einscheren eines überholenden Fahrzeuges vorzunehmenden fahrdynamischem Vorgänge ermöglicht wird. Ist z. B. die Relativgeschwindigkeit vᵣₑₗ positiv, was immer dann der Fall sein wird, wenn das überholende Fahrzeug F2 schneller weiterfährt als das überholte Fahrzeug F1 und ist der Abstand a groß, so nimmt das (adaptive) Gefahrenmaß GF einen großen Wert an und liegt somit über dem vorgegebenen Schwellwert. Dies bedeutet, daß kein Verzögerungsvorgang des Fahrzeuges F1 erforderlich ist.

Ist hingegen bei einer positiven Relativgeschwindigkeit vᵣₑₗ der Abstand a klein und unterschreitet das adaptive Gefahrenmaß GF den Schwellenwert S, so erzeugt die Auswerteeinrichtung 1 das die Verzögerung des Fahrzeuges F1 initiierende Verzögerungssignal RV.

Wird eine extrem hohe positive Relativgeschwindigkeit vᵣₑₗ ermittelt und ist der Abstand a klein, d. h., daß das Fahrzeug F2 das Fahrzeug F1 mit einer sehr hohen Relativgeschwindigkeit vᵣₑₗ überholt und knapp vor dem Fahrzeug F1 einschert, dieses also "schneidet", so besitzt das Gefahrenmaß GF weiterhin einen hohen Wert und liegt über dem vorgegebenen Schwellenwert, so daß kein Verzögerungsvorgang initiiert wird.

Bremst jedoch das überholende Fahrzeug F2 nach dem Einscheren abrupt ab, so wird die Relativgeschwindigkeit vᵣₑₗ negativ. Dies bedeutet, daß das Gefahrenmaß einen negativen Wert annimmt und somit unter dem vorgegebenen Schwellwert S liegt, so daß unmittelbar ein Verzögerungsvorgang des Fahrzeuges F1 eingeleitet wird.

Zusammenfassend ist festzustellen, daß das beschriebene Verfahren zur Abstandsregelung eines Fahrzeuges F1 insbesondere dann vorteilhaft ist, wenn ein Fahrzeug F2 vor dem Fahrzeug F1 einschert, da sich das beschriebene Verfahren durch seine einfache Umsetzbarkeit auszeichnet und ohne lange Lernphasen arbeitet. Die Bewertung des Gefahrenmaßes G mit einem den individuellen Fahrertyp charakterisierenden, adaptiven Faktor AF zur Erzeugung eines adaptiven Gefahrenmaßes GF besitzt den Vorteil, daß hierdurch in einfacher Art und Weise ein akzeptanzförderndes Regelverhalten des beschriebenen Verfahrens geschaffen wird.

## Patentansprüche

1. Verfahren zur Abstandsregelung für ein Fahrzeug, bei dem eine Relativgeschwindigkeit (vᵣₑₗ) und ein Relativabstand (a) zwischen dem Fahrzeug (F1) und einem vorausfahrenden Fahrzeug (F2) ermittelt und aus diesen Größen ein Regelsignal (RV) für eine Abstandsregelungseinrichtung (10) des Fahrzeugs (F1) erzeugt wird,
**dadurch gekennzeichnet, daß**
aus der Relativgeschwindigkeit (vᵣₑₗ) und dem Relativabstand (a) ein Gefahrenmaß (G) bestimmt wird, daß dieses Gefahrenmaß (G) mit einem ein individuelles Fahrverhalten eines Fahrzeugführers des Fahrzeuges (F1) repräsentierenden, adaptiven Faktor (AF) gewichtet wird und daß ein eine Verzögerung des Fahrzeugs (F1) einleitendes Regelsignal (RV) erzeugt wird, wenn das mit dem adaptiven Faktor (AF) gewichtete, fahrzeugführeradaptierte Gefahrenmaß (GF) einen definierten Schwellwert (S) unterschreitet.

2. Verfahren nach Anspruch 1,
**dadurch gekennzeichnet, daß**
der adaptive Faktor (AF) eine konstante Größe ist, oder daß der Faktor (AF) vom Fahrzeugführer vorgegeben wird, oder daß der Faktor (AF) durch ein externes, fahrertyperkennendes System bestimmt wird.

3. Verfahren nach Anspruch 2,
**dadurch gekennzeichnet, daß**
die Relativgeschwindigkeit (vᵣₑₗ) und der Relativabstand (a) von einer Sensoreinrichtung (10) erfaßt werden.

4. Verfahren nach einem der vorangehenden Ansprüche,
**dadurch gekennzeichnet, daß**
die Relativgeschwindigkeit (vᵣₑₗ) aus einer von der Sensoreinrichtung (10) erfaßten Absolutgeschwindigkeit (VA) des vorausfahrenden Fahrzeuges (F2) und einer Eigengeschwindigkeit (Vₑ) eines überholten Fahrzeuges erfaßt wird.

5. Vorrichtung zur Abstandsregelung für ein Fahrzeug mit einer Sensoreinrichtung (10) und einer Auswerteeinrichtung (1), wobei die Signale der Sensoreinrichtung (10) mindestens einen Relativabstand (a) zwischen einem eigenen Fahrzeug (F1) und einem vorausfahrenden Fahrzeug (F2) und eine Relativgeschwindigkeit (vᵣₑₗ) zwischen den Fahrzeugen (F1,F2) repräsentieren, **dadurch gekennzeichnet, dass**
die Auswerteeinrichtung (1) derart ausgebildet ist, dass
- aus mindestens dem Relativgeschwindigkeitssignal (vᵣₑₗ) und dem Relativabstandssignal ein Gefahrenmaß (G) bestimmbar ist,
- das Gefahrenmaß (G) mit einem ein individuelles Fahrverhalten eines Fahrzeugführers des Fahrzeuges (F1) repräsentierenden, adaptiven Faktor (AF) gewichtbar ist,
- bei Unterschreitung eines definierten Schwellwertes (S) des fahrzeugführeradaptierten Gefahrenmaßes (GF) ein eine Verzögerung des Fahrzeugs (F1) einleitendes Regelsignal (AV) erzeugbar ist.

6. Vorrichtung zur Abstandsregelung nach Anspruch 5, **dadurch gekennzeichnet, dass** der adaptive Faktor (AF) durch ein externes, fahrertyperkennendes System oder durch den Fahrzeugführer vorgebbar ist.

## Claims

1. Method for vehicle distance control, in which a relative speed (vᵣₑₗ) and a relative distance (a) between the vehicle (F1) and a vehicle (F2) travelling ahead are determined and, from these variables, a control signal (RV) is generated for a distance control device (10) of the vehicle (F1), **characterized in that** the relative speed (vᵣₑₗ) and the relative distance (a) are used to determine a hazard dimension (G), **in that** this hazard dimension (G) is weighted with an adaptive factor (AF) that represents an individual driving style of a driver of the vehicle (F1), and **in that** a control signal (RV) that initiates a retardation of the vehicle (F1) is generated if the driver-adapted hazard dimension (GF) weighted with the adaptive factor (AF) falls below a defined threshold value (S).

2. Method according to Claim 1, **characterized in that** the adaptive factor (AF) is a constant variable, or **in that** the factor (AF) is predefined by the vehicle driver, or **in that** the factor (AF) is determined by an external system that detects a driver type.

3. Method according to Claim 2, **characterized in that** the relative speed (vᵣₑₗ) and the relative distance (a) are registered by a sensor device (10).

4. Method according to one of the preceding claims, **characterized in that** the relative speed (vᵣₑₗ) is registered from an absolute speed (VA) of the vehicle (F2) travelling ahead, registered by the sensor device (10), and an intrinsic speed (Vₑ) of an overtaken vehicle.

5. Device for vehicle distance control, comprising a sensor device (10) and an evaluation device (1), the signals from the sensor device (10) representing at least a relative distance (a) between a relevant vehicle (F1) and a vehicle (F2) travelling ahead, and a relative speed (vᵣₑₗ) between the vehicles (F1, F2), **characterized in that** the evaluation device (1) is constructed in such a way that
- a hazard dimension (G) can be determined from at least the relative speed signal (vᵣₑₗ) and the relative distance signal,
- the hazard dimension (G) can be weighted with an adaptive factor (AF) that represents an individual driving style of a driver of the vehicle (F1),
- if the driver-adapted hazard dimension (GF) falls below a defined threshold value (S), a control signal (AV) that initiates a retardation of the vehicle (F1) can be generated.

6. Device for distance control according to Claim 5, **characterized in that** the adaptive factor (AF) can be predefined by an external system that detects a driver type or by the vehicle driver.

## Revendications

1. Procédé de régulation de distance pour un véhicule, avec lequel sont déterminées une vitesse relative (vᵣₑₗ) et une distance relative (a) entre le véhicule (F1) et un véhicule qui le précède (F2) et un signal de régulation (RV) est généré à partir de ces grandeurs pour un appareil de régulation de distance (10) du véhicule (F1), **caractérisé en ce qu'**un un indice de danger (G) est déterminé à partir de la vitesse relative (vᵣₑₗ) et de la distance relative (a), que cet indice de danger (G) est pondéré avec un facteur d'adaptation (AF) représentant un comportement de conduite individuel d'un conducteur du véhicule (F1) et qu'un signal de régulation (RV) qui provoque un ralentissement du véhicule (F1) est généré lorsque l'indice de danger adapté au conducteur du véhicule (GF) pondéré avec le facteur d'adaptation (AF) est inférieur à une valeur de seuil prédéfinie (S).

2. Procédé selon la revendication 1, **caractérisé en ce que** le facteur d'adaptation (AF) est une grandeur constante ou que le facteur (AF) est prédéfini par le conducteur du véhicule ou que le facteur (AF) est déterminé par un système externe de reconnaissance du type de véhicule.

3. Procédé selon la revendication 2, **caractérisé en ce que** la vitesse relative (vᵣₑₗ) et la distance relative (a) sont détectées par un dispositif de détection (10).

4. Procédé selon l'une des revendications précédentes, **caractérisé en ce que** la vitesse relative (vᵣₑₗ) est détectée à partir d'une vitesse absolue (VA) du véhicule qui précède (F2) détectée par un dispositif de détection (10) et d'une vitesse propre (vₑ) du véhicule dépassé.

5. Appareil de régulation de distance pour un véhicule comportant un dispositif de détection (10) et un dispositif d'analyse (1), les signaux du dispositif de détection (10) représentant au moins une distance relative (a) entre un véhicule propre (F1) et un véhicule qui le précède (F2) ainsi qu'une vitesse relative (vᵣₑₗ) entre les véhicules (F1, F2), **caractérisé en ce que** le dispositif d'analyse (1) est configuré de telle manière que
- un indice de danger (G) puisse être déterminé au moins à partir du signal de vitesse relative (vᵣₑₗ) et du signal de distance relative,
- l'indice de danger (G) puisse être pondéré avec un facteur d'adaptation (AF) représentant un comportement de conduite individuel d'un conducteur du véhicule (F1),
- un signal de régulation (AV) qui provoque un ralentissement du véhicule (F1) puisse être généré lorsque l'indice de danger adapté au conducteur du véhicule (GF) est inférieur à une valeur de seuil prédéfinie (S) .

6. Appareil de régulation de distance selon la revendication 5, **caractérisé en ce que** le facteur d'adaptation (AF) peut être prédéfini par un système externe de reconnaissance du type de véhicule ou par le conducteur du véhicule.
